# EUROPÄISCHE PATENTSCHRIFT

(11) **EP 3 725 967 B1**
(45) Veröffentlichungstag und Bekanntmachung des Hinweises auf die Patenterteilung: **21.06.2023**
(21) Anmeldenummer: 20000153.5
(22) Anmeldetag: 15.04.2020
(51) Int. Cl.: E04B 1/76

(54) **VERANKERUNGSMITTEL FÜR DIE BEFESTIGUNG VON GEGENSTÄNDEN AN EINER WAND**
MOUNTING ELEMENT FOR ATTACHING OBJECTS TO A WALL
MOYEN D'ANCRAGE POUR LA FIXATION D'OBJETS AU MUR

(30) Priorität: 15.04.2019 AT 1362019
(43) Veröffentlichungstag der Anmeldung: 21.10.2020
(73) Patentinhaber: SIHGA GmbH, 4694 Ohlsdorf (AT)
(72) Erfinder: Kaiser-Mühlecker, Benedikt, 4531 Kematen an der Krems (AT); Gruber, Johann, 4842 Zell am Pettenfirst (AT); Schauer, Robert, 4655 Vorchdorf (AT)

(56) Entgegenhaltungen:
- EP-A2- 2 672 129
- DE-A1-102006 017 459
- DE-A1-102010 017 020
- DE-A1-102012 005 202

## Beschreibung

Die Erfindung betrifft ein Verankerungsmittel für die Befestigung von Gegenständen an einer Wand welche festes Mauerwerk und eine statisch nicht tragfähige Wärmedämmschicht aufweist.

Die DE 102006017459 A1 zeigt ein Verankerungsmittel für das Befestigen von Gegenständen an einer derartigen Wand. Das Verankerungsmittel umfasst einen länglichen Einsatzteil und einen Gewindebolzen. Der aus einem faserverstärkten Kunststoff bestehende Einsatzteil weist an seiner Außenmantelfläche eine gewindeartige Erhebung auf und erstreckt sich durch die Wärmedämmschicht hindurch in eine Bohrung im festen Mauerwerk und ist dort mit dem Mauerwerk verklebt. An seiner freiliegenden Stirnseite weist der Einsatzteil eine Sacklochbohrung auf, in welche ein aus Stahl bestehender Schraubenbolzen einen kleinen Teil der Länge des Einsatzteiles hineinragt und verankert ist. Am frei liegenden Längsbereich des Schraubenbolzens ist der an der Mauer zu verankernde Gegenstand zu befestigen. Nachteilig ist, dass der Einsatzteil relativ teuer ist, und dass er trotz seiner voluminösen Ausführung bei Biegebeanspruchung wie sie im üblichen Belastungsfall auftritt, merklich gekrümmt wird. Diese Krümmung führt zu optisch störenden Materialausbrüchen an der Sichtfläche der Wärmedämmschicht und zu einer störenden starken Begrenzung der zulässigen Höchstlast, da es dadurch bei modernen Hochlochziegeln zu fortschreitendem Risswachstum kommt.

Auch die EP 2672129 A2 zeigt ein Verankerungsmittel für den besagten Zweck, welches einen länglichen Einsatzteil und einen Gewindebolzen umfasst. Der Einsatzteil, welcher aus so verschiedenen Materialien wie faserverstärktem, Kunstsoff und Stahl gefertigt sein kann, weist an seiner Außenmantelfläche Querrippen oder vergleichbare Strukturen auf, sowie mehrere in Achsrichtung durch ihn hindurch verlaufende Öffnungen. Er erstreckt sich durch die Wärmedämmschicht hindurch in eine Bohrung im festen Mauerwerk und ist dort mit dem Mauerwerk verklebt. Ein Gewindebolzen erstreckt sich über die gesamte Länge einer axial durch den die gesamte axiale Öffnung hindurch und zumindest am frei liegenden Stirnende über den Einsatzteil hinaus. Wenn der Einsatzteil aus Stahl besteht ist der Gewindebolzen durch Distanzhülsen aus wärmedämmendem Material gegenüber dem Einsatzteil thermisch abgekoppelt. Neben der axial durchlaufenden Öffnung weist der Einsatzteil noch weitere in Längsrichtung durchverlaufende Öffnungen auf, durch welche bestimmungsgemäß Klebstoffmasse hindurchgedrückt werden kann. Bei der Ausführung aus Stahl ist der Einsatzteil in statischer Hinsicht besser als jener gemäß der DE 102006017459 A1; er ist aber auf Grund der komplizierteren Form in der Herstellung noch deutlich teurer.

Bei der derzeit - wohl auf Grund der niedrigen Materialkosten - beliebtesten Bauweise für die Montage eines Gegenstandes an einer Ziegelmauer, welche mit einer Wärmedämmschicht verkleidet ist, wird eine Gewindestange verwendet, welche etwa 20 cm in das feste Mauerwerk hineinragt und dort verklebt ist. Vom festen Mauerwerk weg verläuft die Gewindestange durch einen Leimholzquader hindurch, welcher als Überbrückung für die Wärmedämmschicht dient, und örtlich das Wä,rm,edämmmaterial ersetzt, und steht über den Leimholzquader vor. Am vorstehenden Bereich wird üblicherweise ein Profil, typischerweise ein Holzbalken festgeschraubt, an welchem dann die weiteren Teile, wie beispielsweise ein kleines Vordach über einer Tür etc. befestigt werden. Aufgrund von Hebelwirkung führt Gewichtsbelastung am vorstehenden Teil der Gewindestange zu einer Auszugkraft an der Gewindestange. Das ist dann statisch besonders ungünstig, wenn das Mauerwerk aus modernen Hochlochziegeln gebildet ist, weil diese gegen Belastung in horizontaler Richtung sehr wenig fest sind. Auch der Montagevorgang ist relativ aufwändig.

Die der Erfindung zu Grunde liegende Aufgabe besteht darin, ein neuartiges Verankerungsmittel bereitzustellen, welches für die Befestigung von Gegenständen an einer Mauer, welche mit einer statisch nicht tragfähigen Wärmedämmschicht verkleidet ist, geeignet ist. Bei vergleichbar guter statischer Belastbarkeit soll das neue Verankerungsmittel gegenüber dem aus der EP 2672129 A2 bekannten weniger Wärmeaustausch mit der Mauer verursachen und mit verringertem Aufwand herstellbar sein.

Zum Lösen der Aufgabe wird von der aus der EP 2672129 A2 bekannten Bauweise ausgegangen, wonach das Verankerungsmittel einen Gewindebolzen und einen länglichen Einsatzteil umfasst, wobei der Einsatzteil aus Stahl besteht und eine in seiner Längsrichtung durch verlaufende zentrale Hohlkammer aufweist, wobei die Querschnittsflächenabmessungen des Einsatzteils (also die zu seiner Längsrichtung normal ausgerichteten Abmessungen) mehr als zweimal so groß sind wie jene des Gewindebolzens, und wobei sich im Einbauzustand der Einsatzteil durch die Wärmedämmschicht hindurch in eine Bohrung im festen Mauerwerk hinein erstreckt und in der Bohrung mit dem festen Mauerwerk verklebt ist, wobei der Gewindebolzen koaxial mit der zentralen Hohlkammer im Einsatzteil verläuft, und an jenem Stirnende des Einsatzteils, welches vom festen Mauerwerk abgewandt liegt, über den Einsatzteil vorsteht.

Als erfindungsgemäße Weiterentwicklung wird dazu vorgeschlagen, den Gewindebolzen nur maximal um das zur Querschnittsflächenabmessung des Einsatzteils gleiche Maß in den Einsatzteil hinein erstrecken zu lassen, und den verbleibenden Längsbereich der Hohlkammer des Einsatzteils mit einer wärmedämmenden Einlage zu befüllen.

In einer weiter bevorzugten Ausführung ist der Einsatzteil in jenem Längsbereich, welcher sich bestimmungsgemäß bei montiertem Verankerungsmittel im festen Mauerwerk und um das zur Querschnittsflächenabmessung des Einsatzteils gleiche Längenmaß aus dem festen Mauerwerk heraus erstreckt, als Stahlhohlprofil mit über den besagten Längsbereich durchgehend konstanter Querschnittsfläche ausgebildet.

Durch die erfindungsgemäße Ausführung werden die folgenden Vorteile erreicht:
- Trotz der metallischen Ausführung ist die Wirkung des Einsatzteils als Brücke für Wärmefluss vergleichsweise gering, da durch die Ausbildung als Hohlprofil bei gleicher Biegesteifigkeit mit weniger Material pro Länge das Auslangen gefunden wird als bei einem Vollprofil und da der Hohlraum im relevanten Längsbereich durch die wärmedämmende Einlage ausgefüllt ist (und nicht durch einen Gewindebolzen), und vor allem da durch die hohe statische Festigkeit der Verankerung mit einer verhältnismäßig geringeren Anzahl von Verankerungsmitteln das Auslangen gefunden wird.
- Der Einsatzteil kann dabei so biegesteif und biegefest ausgebildet werden, sodass Gewichtsbelastung an seinem freien Ende ausschließlich als vertikal ausgerichtete Kräftepaare im festen Mauerwerk ohne lokale hohe Spannungsspitzen abgeleitet wird - was statisch für Hochlochziegel sehr vorteilhaft ist.
- Der Einsatzteil ist einfach und damit kostengünstig herstellbar.

Die Erfindung wird einschließlich Details und optionaler vorteilhafter Weiterentwicklungen an Hand einer Zeichnung veranschaulicht und näher erläutert:

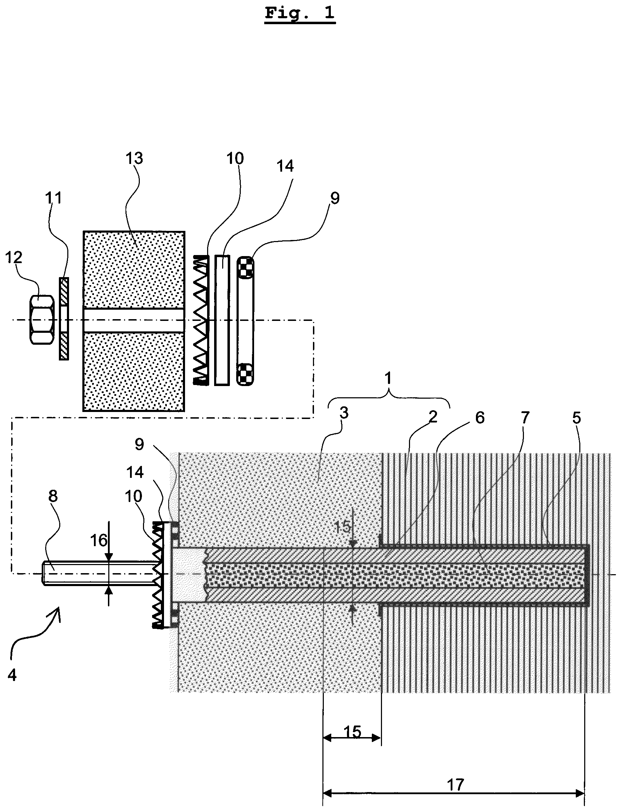

- Fig. 1:: zeigt in seitlicher Teilschnitt- und teilweiser Explosionsdarstellung ein beispielhaftes erfindungsgemäßes Verankerungsmittel in Einbausituation. Aus Anschaulichkeitsgründen sind die Teile 9, 10 und 14 dabei zweimal dargestellt, nämlich einmal aneinander liegend und einmal getrennt voneinander. Die an Bemaßungspfeilen angeordneten Zahlenangaben (15, 16, 17) sind nicht als Längenangaben zu verstehen sondern als Positionsbezeichnungen.

Gemäß Fig. 1 ist eine Wand 1 durch festes Mauerwerk 2 und eine einseitig an diesem aufgebrachte Wärmedämmschicht 3 gebildet, und ein erfindungsgemäßes Verankerungsmittel 4 ist derart an der Wand 1 angebracht, dass es im festen Mauerwerk 2 statisch tragend verankert ist und über die Sichtoberfläche der Wärmedämmschicht 3 heraus ragt. Die Wärmedämmschicht 3, welche typischerweise aus einem Material wie geschäumtem Kunststoff oder einem Faserflies besteht, braucht dabei keinen statischen Beitrag für das Halten des Verankerungsmittels 4 an der Wand 1 zu leisten.

Geordnet nach der Reihenfolge des Anbringens an der Wand 1 umfasst das Verankerungsmittel 4 eine Siebhülse 5, Klebstoff (nicht dargestellt), einen Einsatzteil 6 samt in dessen Hohlraum befindlicher wärmedämmender Einlage 7 und mit ihm verschweißtem oder verschraubtem Gewindebolzen 8, ein quellfähiges Dichtungsband 9, einen einseitig verzahnten Scheibendübel 10, eine Unterlegscheibe 11 und eine Gewindemutter 12.

Der mit dem Verankerungsmittel 4 an der Wand 1 zu befestigende Gegenstand ist im gezeigten Beispiel ein Holzbalken 13.

Ein Montagevorgang kann in der nachfolgend aufgelisteten Reihung von Arbeitsschritten durchgeführt werden. Die dabei erwähnten Dimensionierungsangaben sind beispielhaft:
- Bohren eines Sacklochs in die Wand 1, an welcher sich eine 20 cm starke Wärmedämmschicht 3 befindet, mit einem Bohrungsdurchmesser von 50 mm und eine Bohrungstiefe von etwa 405 mm.
- Einstecken der Siebhülse 5 in das Sackloch bis diese mit der Verbreiterung an ihrer offenen Stirnseite an der Oberfläche des festen Mauerwerks 2 anliegt. Der Außendurchmesser des Längsteils der Siebhülse 5 beträgt 50 mm und die Länge der Siebhülse 5 beträgt 200 mm.
- Einpumpen von pastösem. Klebstoff in das durch die Siebhülse 5 umfasste Volumen. (Als Klebstoff können die gleichen Klebstoffe verwendet werden, welche gemäß dem Stand der Technik für das Einkleben von Gewindestangen oder sonstigen metallischen Ankern in Mauerwerk 2 verwendet werden.)

- Einstecken des Einsatzteils 6, dessen Hohlraum schon mit der wärmedämmenden Einlage 7 befüllt ist, mit dem vom Gewindebolzen 8 abgewandten Ende voraus in die Sachlochbohrung und in das durch die Siebhülse 5 umfasste Volumen bis die Stirnplatte 14, welche den Einsatzteil 6 gewindebolzenseitig abschließt, an der Außenfläche der Wärmedämmschicht 3 anliegt. Dabei wird die in der Siebhülse 5 befindliche Klebstoffmasse größtenteils durch die Wand der Siebhülse 5 hindurch an, Hohlräume des umgebenden festen Mauerwerks 2 (ggf. in die Hohlräume eines Hochlochziegels) verdrängt. Der Einsatzteil 6 hat die Form eines Rohres mit Kreisringquerschnittsfläche. Er besteht aus Stahl und seine Abmessungen sind (beispielhaft):

| | |
|---|---|
| Außendurchmesser: | 42,5 mm |
| Wandstärke: | 7 mm |
| Länge | 400 mm |

- Warten bis der Klebstoff ausgehärtet ist.
- Einen Ring von quellfähigem Dichtungsband 9 an der dem Mauerwerk zugewandten Mantelfläche der Stirnplatte 14 anbringen, so dass es sich zwischen der Wärmedämmschicht 3 und der Stirnplatte 14 befindet und durch diese eingegrenzt wird.
- Den Scheibendübel 10 mit von der Wand 1 weg ausgerichteter Verzahnung auf den Gewindebolzen 8 aufstecken. Der Scheibendübel 10 kann auch einstückig mit der Stirnplatte 14 ausgebildet sein.
- Den Holzbalken 13 so auf den Gewindebolzen 8 aufstecken, dass der Gewindebolzen 8 (Gewinde M16) eine Schraubendurchgangsbohrung am Holzbalken 13 durchdringt.
- Am freien Ende des Gewindebolzens 8 die Unterlegscheibe 11 aufstecken und dann die Gewindemutter 12 aufschrauben und so fest anziehen, dass dadurch der Holzbalken 13 so fest gegen den Scheibendübel 10 gedrückt wird, dass sich dessen Zähne in den Holzbalken 13 versenken, bis dieser an der Basisfläche des Scheibendübels 10 anliegt.

Test haben gezeigt, dass dann, wenn das feste Mauerwerk 2 durch moderne Hochlochziegel gebildet ist, und das Verankerungsmittel 4 wie im Beispiel erwähnt bemessen ist, ein Versagen der Verankerung bei einer Belastungskraft von etwa 20 kN auftritt, wenn diese Kraft am Gewindebolzen 8 angreift und normal zu dessen Längsrichtung ausgerichtet ist. Wenn diese Bruchlast durch den bei derartigen Bauwerken passenden Sicherheitsbeiwert von 2,5 dividiert wird, ergibt sich eine zulässige Gewichtsbelastung des Verankerungsmittels von 8 kN.

Zum Vergleich: Bei jener üblichen Bauweise gemäß dem oben erwähnten Stand der Technik bei welchem eine eingeklebte Gewindestange und ein Leimholzquader als Überbrückung der Wärmedämmschicht verwendet werden, liegt die vergleichbare Bruchlast bei 1,4 kN und die vergleichbare zulässige Gewichtsbelastung bei 560 N.

Damit bei der erfindungsgemäßen Bauweise die für das Verankerungsmittel 4 maximal zulässige Belastung über einen Holzbalken 13 überhaupt aufgebracht werden, kann, wird der Scheibendübel 10 verwendet. Wenn kein Scheibendübel 10 verwendet werden würde, wäre die maximalzulässige Last der Gesamtanordnung durch die Lochleibung am Schraubendurchgangsloch im Holzbalken 13 begrenzt. Durch den Scheibendübel 10, wird diese Begrenzung umgangen. Ohne Scheibendübel 10 müsste für gleiche statische Belastbarkeit ein Gewindebolzen 8 mit deutlich größerem Durchmesser verwendet werden.

Gegen die durch den Holzbalken auf den Scheibendübel 10 und auf die Stirnplatte 14 ausgeübte Druckkraft sind diese Teile an der äußeren Stirnseite des Einsatzteils 6 abgestützt, sodass diese Druckkraft nicht die Verankerung des Einsatzteils 6 in der Wand 1 belastet.

Zweck des quellfähigen Dichtungsbandes 9 ist es, jenen Bereich der Wärmedämmschicht 3, welcher für den Einsatzteil 6 durchbohrt werden musste, gegen die äußere Umgebung luftdicht abzudichten.

Bei der dargestellten erfindungsgemäßen Befestigung eines Holzbalkens 13 an einer Wand 1 liegt der Holzbalken 13 in den Längsbereichen zwischen den Befestigungspunkten nicht an der Wand 1 an, und kann daher dort hinterlüftet werden. Damit werden Schäden die ansonsten durch Staunässe entstehen könnten, vermieden.

Bei der hier dargestellten vorteilhaften Bauweise ist der Gewindebolzen 8 mit dem hohlprofilförmigen Einsatzteil 6 verbunden, indem auf den Einsatzteil 6 eine Stirnplatte 14 geschweißt ist, und auf die Stirnplatte 14 der Gewindebolzen 6. Diese Bauweise ist einfach herzustellen, robust und spielfrei und bei der Montage komfortabel, Obendrein ist sie bezüglich Wärmeübertragung besonders günstig.

Innerhalb des Erfindungsgedankens sind aber auch andere starre Verbindungen möglich. (Schraubverbindung, Klemmverbindung, Klebeverbindung, direktes Verschweißen von Schraubenbolzen und Einsatzteil miteinander...).

Bevorzugt ist der Einsatzteil 6 ein Hohlprofil mit kreisringförmiger Querschnittsfläche. Vorteile sind die einfache Herstellbarkeit des Einsatzteils 6 und der erforderlichen Sacklochbohrung in der Wand 1.

Gemäß einer nicht dargestellten optionalen Bauweise weist die Außenmantelfläche des Einsatzteils 6 in jenem Längsbereich, welcher sich bestimmungsgemäß im festen Mauerwerk 2 erstreckt, lokale Vertiefungen auf, beispielsweise in Form von Bohrungen oder in Umfangsrichtung umlaufenden Rillen. Diese lokalen Vertiefungen sind bei der Herstellung des Einsatzteils 6 aus einem profilförmigen Halbzeug einfach ausbildbar, und sie bewirken im Zusammenspiel mit Klebstoffmasse einen Formschluss gegen das Herausziehen des Einsatzteils 6 aus dem Mauerwerk 2.

## Patentansprüche

1. Verankerungsmittel (4) für die Befestigung eines Gegenstandes (13) an einer Wand (1), welche aus festem Mauerwerk (2) und einer äußeren Wärmedämmschicht (3) besteht, wobei das Verankerungsmittel (4) einen Gewindebolzen (8) und einen länglichen Einsatzteil (6) umfasst, wobei der Einsatzteil aus Stahl besteht und eine in seiner Längsrichtung durch verlaufende zentrale Hohlkammer aufweist, wobei die Querschnittsflächenabmessung (15) des Einsatzteils (6) mehr als zweimal so groß ist, wie die Querschnittsflächenabmessung (16) des Gewindebolzens (8), und wobei sich im bestimmungsgemäßen Einbauzustand der Einsatzteil (6) durch die Wärmedämmschicht (3) hindurch in eine Bohrung im festen Mauerwerk (2) hinein erstreckt und in der Bohrung mit dem festen Mauerwerk (2) verklebt ist, wobei der Gewindebolzen (8) parallel zur Längsrichtung des Einsatzteils (6) ausgerichtet ist und an dem vom festen Mauerwerk (2) abgewandt liegenden Stirnende des Einsatzteils (6) über diesen vorsteht,
**dadurch gekennzeichnet, dass**
sich der Gewindebolzen (8) nur maximal um das zur Querschnittsflächenabmessung (15) des Einsatzteils (6) gleiche Maß in den Einsatzteil (6) hinein erstreckt, und dass sich in der zentralen Hohlkammer des Einsatzteils (6) eine wärmedämmenden Einlage (7) befindet.

2. Verankerungsmittel (4) nach Anspruch 1, **dadurch gekennzeichnet, dass** der Einsatzteil (6) in jenem Längsbereich (17), welcher sich bestimmungsgemäß bei montiertem Verankerungsmittel (4) im festen Mauerwerk (2) und um das zur dortigen Querschnittsflächenabmessung (15) des Einsatzteils (6) gleiche Längenmaß aus dem festen Mauerwerk heraus erstreckt, ein Hohlprofil ist, dessen Querschnittsfläche in diesem Längenbereich (17) durchgehend gleich ist.

3. Verankerungsmittel (4) nach Anspruch 1 oder 2, **dadurch gekennzeichnet, dass** der Einsatzteil (6) und der Gewindebolzen (8) miteinander verschweißt oder verschraubt sind.

4. Verankerungsmittel (4) nach Anspruch 3, **dadurch gekennzeichnet, dass** der Einsatzteil (6) und der Gewindebolzen (8) mittelbar unter Zwischenlage einer jeweils stirnseitig an Einsatzteil (6) und Gewindebolzen (8) angeordneten Stirnplatte (14) miteinander verschweißt oder verschraubt sind.

5. Anordnung, welche ein Verankerungsmittel (4) gemäß einem der Ansprüche 1 bis 4 sowie eine Wand (1), welche aus festem Mauerwerk (2) und einer äußeren Wärmedämmschicht (3) besteht, sowie einen mittels des Verankerungsmittels (4) an der Wand (1) befestigten Holzbalken (13) umfasst, wobei sich der Gewindebolzen (8) des Verankerungsmittel (4) durch eine Schraubendurchgangsbohrung im Holzbalken (13) hindurch erstreckt, **dadurch gekennzeichnet, dass** am Gewindebolzen (8) zwischen dem Holzbalken (13) und dem Einsatzteil (6) des Verankerungsmittels (4) ein Scheibendübel (10) angeordnet ist, dessen Zähne im Material des Holzbalkens stecken.

6. Anordnung nach Anspruch 5, **dadurch gekennzeichnet, dass** sich ein Verankerungsmittel gemäß Anspruch 4 angewendet wird und sich zwischen der Stirnplatte (14) und der Wand (1) ein quellfähiges Dichtungsband (9) befindet, welches an Wand (1) und Stirnplatte (14) anliegt und den Einsatzteil (6) umringt.

## Claims

1. Anchoring element (4) for fastening an object (13) to a wall (1), which consists of solid masonry (2) and an external thermal insulation layer (3), where the anchoring element (4) encompasses a threaded bolt (8) and an oblong insert part (6), where the insert part is made of steel and has a central hallow cavity running longitudinally through it, where the cross-section area dimension (15) of the insert part (6) is more than twice as large as the cross-section area dimension (16) of the threaded bolt (8), and where, in the intended installation condition, the insert part (6) extends through the thermal insulation layer (3) into a hole in the solid masonry (2) and is bonded inside the hole to the solid masonry (2), where the threaded bolt (8) is oriented parallel to the longitudinal axis of the insert part (6) and extends past the end face of the insert part (6) on the side opposite the solid masonry wall (2), **characterised by** the fact that the threaded bolt (8) extends into the insert part (6) by no more than the same distance as the cross-section area dimension (15) of the insert part (6), and that the central hollow cavity of the insert part (6) contains a thermally insulating insert (7).

2. Anchoring element (4) as per Claim 1, **characterised by** the fact that the insert part (6) is a hollow profile within the length section (17) that properly extends into the solid masonry (2) and extends out of the solid masonry by the same length as the cross-section area dimension (15) of the insert part (6) when the anchoring element (4) is installed, the which hollow profile has a cross-section area that remains consistent over this length section (17).

3. Anchoring element (4) as per Claim 1 or 2, **characterised by** the fact that the insert part (6) and the threaded bolt (8) are welded or bolted together.

4. Anchoring element (4) as per Claim 3, **characterised by** the fact that the insert part (6) and the threaded bolt (8) are indirectly welded or bolted together via an intervening face plate (14) situated against the respective end faces of the insert part (6) and threaded bolt (8).

5. Arrangement encompassing an anchoring element (4) as per one of the Claims 1 to 4 and a wall (1), which consists of solid masonry (2) and an external thermal insulation layer (3), and a wooden bar (13) fastened to the wall (1) with the anchoring element (4), where the threaded bolt (8) of the anchoring element (4) extends through a bolt through-hole in the wooden bar (13), **characterised by** the fact that a spiked washer (10) is situated on the threaded bolt (8) between the wooden bar (13) and the insert part (6) of the anchoring element (4) such that the spikes penetrate into the material of the wooden bar.

6. Arrangement as per Claim 5, **characterised by** the fact that an anchoring element as per Claim 4 is used and a swellable sealing tape (9) is present between the face plate (14) and the wall (1) such that it is in contact with the wall (1) and face plate (14) and encircles the insert part (6).

## Revendications

1. Moyen d'ancrage (4) pour la fixation d'un objet (13) sur une paroi (1), laquelle est composée d'une structure de maçonnerie fixe (2) et d'une couche d'isolation thermique externe (3), le moyen d'ancrage (4) comprenant un boulon fileté (8) et un élément d'insertion (6) oblong, l'élément d'insertion se composant d'acier et étant traversé en son sens longitudinal par une chambre creuse centrale, la dimension de la surface de section (15) de l'élément d'insertion (6) étant deux fois plus grande que la dimension de la surface de section (16) du boulon fileté (8), et dans un état de montage adéquat, l'élément d'insertion (6) s'étendant jusque dans un perçage présent dans la structure de maçonnerie fixe (2) en traversant la couche d'isolation thermique (3) et étant collé à la structure de maçonnerie fixe (2) dans le perçage, le boulon fileté (8) étant orienté parallèlement au sens longitudinal de l'élément d'insertion (6) et faisant saillie avec l'extrémité frontale de l'élément d'insertion (6), laquelle est située à l'opposé de la structure de maçonnerie fixe (2), **caractérisé en ce que** le boulon fileté (8) ne s'étend dans l'élément d'insertion (6) au maximum que de la même dimension que la dimension de la surface de section (15) de l'élément d'insertion (6), et qu'un insert calorifuge (7) est situé dans la chambre creuse centrale de l'élément d'insertion (6).

2. Moyen d'ancrage (4) selon la revendication 1, **caractérisé en ce que** l'élément d'insertion (6) dans la zone longitudinale (17), laquelle ressort de la structure de maçonnerie fixe de manière conforme lorsque le moyen d'ancrage (4) est monté dans la structure de maçonnerie fixe (2) et laquelle ressort de la même dimension longitudinale que la dimension de surface de section (15) de l'élément d'insertion (6), est un profilé creux, dont la surface de section dans cette zone longitudinale (17) reste la même.

3. Moyen d'ancrage (4) selon la revendication 1 ou 2, **caractérisé en ce que** l'élément d'insertion (6) et le boulon fileté (8) sont soudés ou vissés ensemble.

4. Moyen d'ancrage (4) selon la revendication 3, **caractérisé en ce que** l'élément d'insertion (6) et le boulon fileté (8) sont soudés ou vissés ensemble indirectement avec interposition d'une plaque frontale (14) placée respectivement sur le côté frontal contre l'élément d'insertion (6) et le boulon fileté (8) .

5. Assemblage qui comprend un moyen d'ancrage (4) conformément à l'une des revendications 1 à 4 ainsi qu'une paroi (1) se composant d'une structure de maçonnerie fixe (2) et d'une couche d'isolation thermique externe (3), ainsi que d'une poutre en bois (13) fixée à la paroi (1) à l'aide d'un moyen d'ancrage (4), le boulon fileté (8) du moyen d'ancrage (4) s'étendant par un perçage de passage de vis jusque dans la poutre en bois (13), **caractérisé en ce qu'**un crampon bouledogue (10) est placé contre le boulon fileté (8) entre la poutre en bois (13) et l'élément d'insertion (6) du moyen d'ancrage (4), dont les dents pénètrent dans le matériau de la poutre en bois.

6. Assemblage selon la revendication 5, **caractérisé en ce qu'**un moyen d'ancrage en vertu de la revendication 4 est utilisé et qu'entre la plaque frontale (14) et la paroi (1) se situe une bande d'étanchéité expansible (9), laquelle repose contre la paroi (1) et la plaque frontale (14) et entoure l'élément d'insertion (6).
